# EUROPEAN PATENT APPLICATION

(11) **EP 3 467 979 A1**
(43) Date of publication of application: **10.04.2019**
(21) Application number: 17737869.2
(22) Date of filing: 01.06.2017
(51) Int. Cl.: H02G 3/14, H02G 3/12, H02G 3/10

(54) **FRAME FOR ELECTRICAL AND/OR ELECTRONIC DEVICES**

(30) Priority: 03.06.2016 ES 201630752
(71) Applicant: Simon, S.A.U., 08013 Barcelona (ES)
(72) Inventor: Arderiu Costas, Jordi, 08013 BARCELONA (ES); Vázquez Villa, Francesc Xavier, 08013 BARCELONA (ES); Plaja Miró, Salvi, 08013 BARCELONA (ES)
(74) Representative: Espiell Volart, Eduardo Maria
(86) International application number: PCT/IB2017/053227
(87) International publication number: WO 2017/208183

(57) **Abstract**

Of the type provided with at least two holes (12, 15) to fasten electrical and/or electronic devices consisting in a single body having fastening means to be fastened on at least one flush-mounted box (21), and that comprises a first part incorporating a hole (12) intended to be fastened on a flush-mounted box (21) by fastening means adapted to fasten the frame (1) on the flush-mounted box (21) and a second part incorporating a hole (15) that is not associated to a flush-mounted box (21). The frame (1), at least on the part incorporating the hole (15) that is not associated to a box (21) shows at least a separator element (16) supporting the frame (1) on the wall on which it is to be installed. The separator element (16) is constituted by the frame (1) itself folded creating a flap o rim, the separator element (16) spanning on the whole or part of the perimeter of the frame (1).

## Description

### OBJECT OF THE INVENTION

The invention, as stated in the title of this specification, refers to a frame for electrical and/or electronic devices, which provides the function to which it is intended with several advantages and characteristics of novelty that will be explained in detail thereafter, that mean an improvement on the current state of the art.

The object of this invention refers to a frame of the type used to fasten electrical and/or electronic devices incorporated in boxes, such as for example those for flush mounting and those for surface mounting.

### FIELD OF APPLICATION OF THE INVENTION

The field of application of this invention is within the sector of the industry engaged in the production of equipment, mechanisms, devices and their accessories of electrical and electronic material.

### BACKGROUND OF THE INVENTION

Currently, the electrical or electronic devices that are installed within a box, use to be fastened by means of a frame that, constituted by a single body provided with a series of holes, is fastened by screwing it. This frame has a shape and dimensions coinciding with the shape and sizes of the box in order to remain fitted over it and so that the said holes, usually one on each side, remain coinciding with the cavities provided in the box to screwing the related screw.

The problems that this invention seeks to solve are those arising by the fact that, when they are installed to fasten several electrical or electronic devices, a recessed space available in the wall is required to install each of the related flush-mounted boxes to fasten each device and only one device fastening or connection access is available from outside.

Therefore should be desirable, to have a common frame available for all the flush-mounted boxes to be installed in each case, cutting down costs and making installation easier as it reduces the number of elements and fastening operations to be carried out, but that in addition allows to extend the fastening or connection of a number of electrical and/or electronic devices greater than the number of flush-mounted boxes to be installed in the wall, allowing to make better use of the space and providing the element with a greater versatility.

As reference to the current state of the art, it can be pointed out that however different types and models of frames for flush-mounted boxes are known, the existence of any having technical and structural characteristics similar to that herein presented and claimed is not known.

### EXPLANATION OF THE INVENTION

The frame for groups of flush-mounted boxes that the invention proposes, is therefore configured as an outstanding novelty within its field of application, and when it is implemented the above objective mentioned as ideal is satisfactorily reached, the characterizing details making it possible and that distinguish the said frame, being suitably included in the final claims attached to this specification.

In an embodiment of the invention, the frame, which aim is fastening electrical and/or electronic devices in flush-mounted boxes, has a structural configuration consisting in a single body provided with at least two holes to fit the devices with fastening means to be fastened on at least one flush-mounted box, provided with a number of holes to fastening electrical and/or electronic devices greater than flush-mounted boxes, so that at least one hole of the frame is not associated to a box and therefore only one of the holes comprises fastening means adapted to fasten the frame.

This arrangement provides the advantage to allow fastening elements, that is to say, surface electrical and/or electronic devices, in addition to avoid installing a flush-mounted box for each fastening point.

In addition, according to another characteristic of the invention, the said frame, at least in the part incorporating the hole or holes that are not directly associated to a flush-mounted box, has a separator element that avoid the frame to directly contact the said flush-mounted boxes, when the frame is already fastened on the frame of the box.

This allows being able to pass cables through the assembly, from one of the flush-mounted boxes to the surface element that is fastened on the frame without being directly associated to a flush-mounted box.

Last, it shall be pointed out that the said separator element is preferably constituted by folding the material itself of the frame on at least one of its perimetral edges, at least on the area of the hole to fastening surface elements without being directly associated to a flush-mounted box, and preferably on the longitudinal edges.

The separator element allows that the surface of contact of the frame with the wall is reduced, because, contrary to the conventional systems, in which the full internal surface of the frame is that making contact, now, it is only the tip of the edge that is making contact with the wall, which in turn improves the frame stability, because its fastening on the wall will be affected by the irregularities thereof to a lesser extent.

Ultimately, the frame of the invention is specially devised to fasten electrical and/or electronic devices on one or several boxes, consisting, as an essential feature, in a single body provided with holes in which electrical and/or electronic devices are fastened, a number of holes existing on the frame to fastening the said electrical and/or electronic devices greater than flush-mounted boxes, so that, at least, one of the said holes is not associated to a flush-mounted box allowing to fasten surface electrical and/or electronic devices.

In another embodiment of the invention, the frame in addition has a structural configuration that, instead of being coupled to be individually fastened over a single box, is coupled to one or several boxes making up a group of at least two boxes attached and better if they are linkable to each other, constituting a frame that, advantageously, allows the simultaneously fastening of every and each of the said boxes that make up the said group.

The frame for groups of boxes disclosed therefore consists in an innovating structure having features unknown up to now for the aim to which it is intended, reasons that jointly, with its practical utility, provide it with sufficient ground to obtain the privilege of exclusivity applied for.

### DESCRIPTION OF THE DRAWINGS

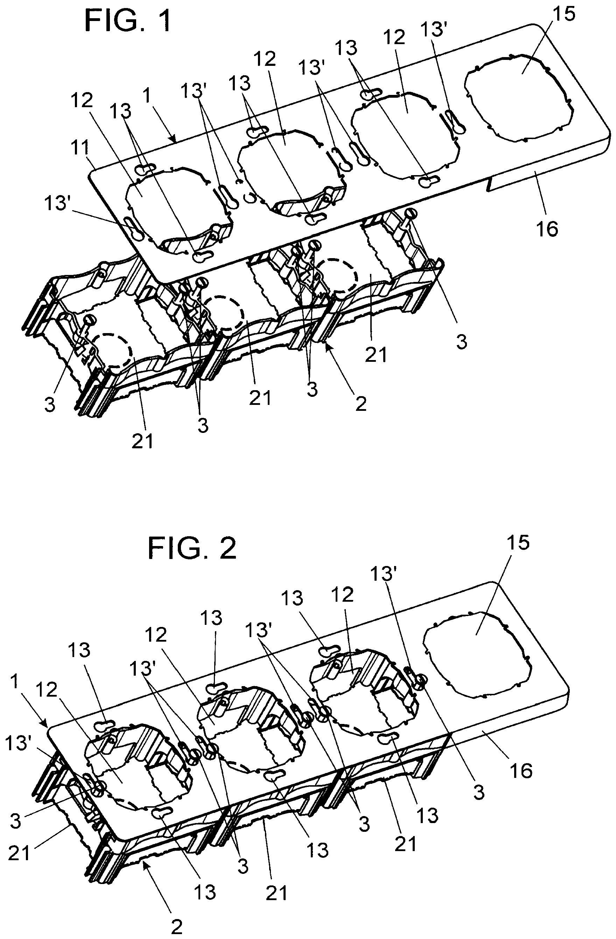

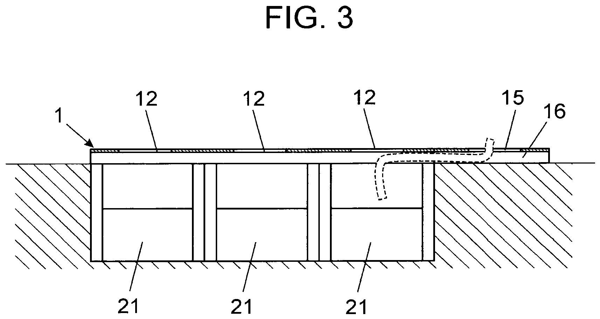

To complement the description being performed and in order to be of assistance for a best understanding of the features of the invention, this specification has attached, as an integral part thereof, a set of drawings in which with illustration and not limitation purpose the following has been represented:
The figure number 1.- It shows a view in perspective of an example of embodiment of the frame, object of the invention, jointly with a group of flush-mounted boxes, linkable to each other, to which it is intended, represented exploded, that means, not coupled to each other, showing the parts and elements it comprises as well as its configuration and arrangement;
the figure number 2.- It shows a view in perspective of the example of the
   frame, according to the invention, and of the group of flush-mounted boxes shown in the figure 1, in this case represented after they are coupled to each other; and
the figure number 3.- Shows a schematic cross section view of the assembly frame and group of flush-mounted boxes, represented after they are installed on the wall, showing the arrangement thereof on it, as well as the way of passing the cables, represented by means of dashed lines, from one of the boxes to the area of the frame without box.

### PREFERRED EMBODIMENT OF THE INVENTION

In view of the said figures, and according to the numbering adopted, a preferred but not limitative example of embodiment can be seen of the frame for boxes of the invention, which includes the parts and elements indicated and disclosed in detail below.

Thus, as it can be seen in the said figures, the frame (1) at hand, consists in a single body provided with at least two holes (12, 15) for fitting electrical and/or electronic devices intended to be fastened, by fastening means (13, 13') adapted to fasten the frame (1) over at least one flush-mounted box (21), being distinguished because it comprises a number of holes (12, 15) for fastening the said electrical and/or electronic devices greater than the flush mounted boxes (21), so that at least one hole (15) of the frame (1) is not associated to one box (21) and therefore is not provided with fastening means adapted to fasten the frame, and allows to fasten a surface electrical and/or electronic device.

In addition, preferably, the said frame (1), at least in the part incorporating the said hole (15) that is not associated to one box (21), shows at least a separator element (16) or rim that avoids the frame (1) to directly contact the flush-mounted boxes (21) after the frame (1) is fastened on the box (21), determining a space adapted to passing cables.

In a preferred way, the said separator element (16) is constituted by the frame (1) itself folded so that it determines a flap or rim and, preferably, it extends along the length of the longitudinal edges of the frame.

In an embodiment of the invention the rim (16) does not span throughout the whole perimeter of the frame (1), but only that corresponding to the hole (15) of the frame (1) that is not associated to a box (21).

As it can be seen in the figures 1 and 2, the fastening of the single body constituting the frame (1) to the flush-mounted boxes (21) is carried out by means of screws (3) inserted in second holes (13, 13') keyhole shaped and having a wider end, provided around each of the cavities (12, 15) of said frame (1).

The nature of this invention being sufficiently disclosed as well as the way of implementing it, it is not considered necessary to extend its explanation any longer to any person skilled in the art understands its scope and the advantages arising from it, and it is stated that, within its essentiality, it can be implemented in other embodiments different in detail from those stated for example purpose, and to which shall also extend the protection applied for, provided that its main principle is not altered, changed or modified.

## Claims

1. Frame (1) for electrical and/or electronic devices, of the type provided with at least two holes (12, 15) to fasten the said devices that comprises a single body having fastening means to be fastened on at least one flush-mounted box (21), **characterized in that** it comprises a first part incorporating a hole (12) intended to be fastened to a flush-mounted box (21) by fastening means adapted to fasten the frame (1) to the flush-mounted box (21) and a second part incorporating a hole (15) that is not associated to a flush-mounted box (21).

2. Frame (1) for electrical and/or electronic devices, according to claim 1, **characterized in that** the frame (1), at least on the part incorporating the hole (15) that is not associated to a box (21) shows at least a separator element (16) supporting the frame (1) on the wall in which it is installed.

3. Frame (1) for electrical and/or electronic devices, according to claim 2, **characterized in that** the separator element (16) is constituted by the frame (1) itself folded creating a flap or rim.

4. Frame (1) for electrical and/or electronic devices, according to claim 2 or 3, **characterized in that** the separator element (16) does not span throughout the whole perimeter of the frame (1).

5. Frame (1) for electrical and/or electronic devices, according to the claim 2 or 3, **characterized in that** the separator element (16) spans throughout the longitudinal edges of the frame (1).
